# EUROPÄISCHE PATENTSCHRIFT

(11) **EP 0 545 889 B1**
(45) Veröffentlichungstag und Bekanntmachung des Hinweises auf die Patenterteilung: **28.02.2001**
(21) Anmeldenummer: 92890255.0
(22) Anmeldetag: 02.12.1992
(51) Int. Cl.: C21C 5/56

(54) **Verfahren zum Einschmelzen von Schrott**
Process for melting scrap
Procédé de fusion de ferraille

(30) Priorität: 05.12.1991 AT 243491
(43) Veröffentlichungstag der Anmeldung: 09.06.1993
(73) Patentinhaber: VOEST-ALPINE INDUSTRIEANLAGENBAU GMBH, 4020 Linz (AT); DaimlerChrysler AG, 70567 Stuttgart (DE)
(72) Erfinder: Nieder, Wolfgang, Dipl.-Ing., A-4040 Linz (AT); Jeschar, Rudolf, Prof.Dr.-Ing., W-3380 Goslar 1 (DE); Pötke, Wolfgang, Dr.-Ing., W-3392 Clausthal-Zellerfeld (DE); Specht, Eckehard, Dr.-Ing., W-3392 Clausthal-Zellerfeld (DE)
(74) Vertreter: Haffner, Thomas M., Dr.

(56) Entgegenhaltungen:
- DE-A- 1 758 608
- DE-A- 2 737 441
- DE-B- 2 418 109
- DE-U- 8 412 739
- US-A- 2 526 474

## Beschreibung

Die Erfindung bezieht sich auf ein Verfahren zum Einschmelzen von Schrott in einer überhitzten Eisenschmelze.

Für das Einschmelzen von Schrott ist es bekannt Schrottpakete einem Schacht zuzuführen, wobei die Zuführung in Form von sogenannten synthetischen Paketen erfolgen kann, welche Schredderschrott zusammen mit definierten Mengen an definierten Sorten von Kunststoffen in bestimmten Abmessungen und Konzentrationen enthalten. Die in den Schacht eingebrachten Feststoffe werden in der Folge erwärmt, wobei in der Folge für einen derartigen Schmelzprozeß bisher in erster Linie Erdgas-Sauerstoff-Brenner vorgeschlagen wurden. Die Schmelze kann anschließend in einem erhitzten Koksbett aufgekohlt werden, wobei Koks durch eingeblasene Preßluft verbrannt wird. Schließlich kann das synthetische Roheisen und die Schlacke über einen Syphon abgezogen werden.

Bedingt durch die Anwesenheit von Kunststoffen in derartigem Schrott, enthalten die Prozeßabgase eine Reihe von Schwelgasen, die sich bei der Zersetzung der in den Schrottpaketen enthaltenen Kunststoffe gebildet haben. Es wurde daher bereits vorgeschlagen, derartige Gase in einen sogenannten Thermoreaktor einzuleiten und bei Temperaturen von über 1200°C zu cracken. Bei der Zersetzung der Kohlenwasserstoffe der Schwelgase in einem heißen Koksbett muß damit gerechnet werden, daß die aus dem Koks freigesetzte Asche Schwierigkeiten bei der Durchgasung des Koksbettes bereitet. In jedem Fall muß so vorgegangen werden, daß sich bei der Abkühlung der Abgase Dioxine und polyhalogenierte Furane nicht bilden können. Mit anderen Worten bedeutet dies, daß Sauerstoff in den Abgasen nicht enthalten sein soll, und es muß daher in einem derartigen Thermoreaktor generell unter Sauerstoffmangel gearbeitet werden.

Bedingt durch die thermodynamischen Voraussetzungen für die Verbrennung von Kohlenwasserstoffen zur Erzielung der erforderlichen Schmelzwärme sind große Gasströme erforderlich, wobei gleichzeitig die Wärmeübertragung zwischen den Gasströmen und dem einzuschmelzenden Schrott relativ ungünstig ist. Darüberhinaus gelingt ein Einschmelzen von Schrott unter Verwendung von Erdgas-Sauerstoff-Brennern in der Regel nur dann, wenn gleichzeitig Koks im Schacht eingesetzt wird, wodurch wiederum eine relativ hohe Abgasmenge einer intensiven Reinigung unterworfen werden muß. Der Aufwand für die Abgasreinigung ist insbesondere mit Rücksicht auf die Gefahr der Bildung von Dioxinen und polyhalogenierten Furanen relativ hoch.

Erfindungsgemäß wird nun ein Verfahren zum Einschmelzen von Schrott in einer überhitzten Eisenschmelze vorgeschlagen. Die Grundlagen eines derartigen Verfahrens sind beispielsweise der Zeitschrift Canadian Metallurgical Quarterly, Volume 12, Nummer 4 (1973), Seiten 465 ff, in dem Artikel von R.I.L. Guthrie und P.Stubbs "Kinetics of scrap melting in baths of molten pig iron" zu entnehmen. Weitere grundsätzliche Angaben zu einer derartigen Verfahrensweise zum Einschmelzen von Stahl in einer überhitzten Schmelze befinden sich in Transactions of the Metallurgical Society of AIME, Volume 233, Juli 1965, Seiten 1420 ff, in dem Artikel von R.D.Pehlke, P.D. Goodell und R.W. Dunlap "Kinetics of Steel Dissolution in Molten Pig Iron".

Grundsätzliche Zusammenhänge in bezug auf die Vorgänge beim Aufschmelzen von Kohlenstoffstahl in geschmolzenen Eisenkohlenstofflegierungen werden in dem Artikel von R.G. Olsson, V.Koump und T.F. Perzak "Rate of Dissolution of Carbon-Steel in Molten Iron-Carbon Alloys" in Transactions of the Metallurgical Society of AIME, Volume 233, September 1965, Seiten 1654 ff, aufgezeigt.

Aus der DE-A-24 18 109 ist eine Vorrichtung und ein Verfahren zur kontinuierlichen Stahlerzeugung bekanntgeworden, bei welchem Schrott- und/oder Eisenschwamm gegebenenfalls mit schmelzflüssigen Eisenlegierungen eingesetzt wird. Das eingesetzte Material wird in einem ersten Raumabschnitt durch zusätzliches Energieeinbringen aufgeschmolzen und in einem zweiten Raumabschnitt gefrischt.

Die DE-A-1 758 608 beschreibt ein Verfahren zum kontinuierlichen Einbringen von Schrott in paketierter Form in einen Schmelzbehälter, in welchem sich beispielsweise eine gesondert hergestellte überhitzte Schmelze befinden kann. Das beschriebene Verfahren ist ein Frischverfahren, wobei auch der Kohlenstoffgehalt des Roheisens, seine Verdünnung durch die Schrottauflösung und sein Austrag durch das Frischen berücksichtigt wird.

Aus der DE-A-27 37 441 ist weiters ein Verfahren bekanntgeworden, bei welchem ein Schachtofen mit Kamin zum Einschmelzen von Schrott verwendet wird. Die Schmelze wird in einer Kammer aufgekohlt und gefrischt, wobei die Wärmebilanz durch einen Teilkreislauf von Metallschmelze verbessert werden kann.

Prinzipiell hat eine Verfahrensweise, bei welcher der Schmelzvorgang durch eine Wärmeübertragung zwischen flüssiger Schmelze und einzuschmelzendem Schrott erfolgt zumindest theoretisch den Vorteil, daß der Wärmeübergang um etwa eine Zehnerpotenz höher liegt als zwischen Gasen und Feststoffen, wobei die Erfindung darauf abzielt, eine entsprechende Verfahrensweise vorzuschlagen, bei welcher ein derartiges Einschmelzen von Schrott und insbesondere von den eingangs erwähnten synthetischen Schrottpaketen mit einem vorgegebenen Kunststoffanteil in wirtschaftlicher Weise gelingt, wobei der Einsatz von Koks wesentlich herabgesetzt werden soll und der Aufwand für die Reinigung der Prozeßabgase wesentlich herabgesetzt werden kann. Zur Lösung dieser Aufgabe wird nun erfindungsgemäß ein Verfahren zum Einschmelzen von Schrott in einer überhitzten Eisenschmelze vorgeschlagen, wobei der Schrott in paketierter Form chargiert wird und in eine mittels eines vom Schrottschmelzprozeß gesonderten Schmelzprozeß hergestellte überhitzte Eisenschmelze eingebracht wird, der C-Gehalt der überhitzten Eisenschmelze außerhalb des Schrottschmelzprozesses in der Schmelze eingestellt wird und die C-Zugabe in Abhängigkeit von der C-Abnahme im geschmolzenen Schrott in einem gesonderten Schmelzofen vorgenommen wird, der Schrottschmelzprozeß in einem Schachtofen durchgeführt wird und die überhitzte aufgekohlte Eisenschmelze im Querstrom zum Schachtofen am Fuß des Schachtes unter Ausbildung eines gasdichten Verschlusses hindurchgeleitet und in einem Sammelgefäß aufgefangen wird, im Schachtofen ein Sauerstoffmangel aufrechterhalten wird und die Abgase des Schachtofens, insbesondere Pyrolyse- oder Schwelgase, gemeinsam mit gegebenenfalls in den Schachtofen eingebrachten inerten Trägergasen einer Gasreinigung unterworfen werden. Dadurch, daß der Schrott unverändert in paketierter Form chargiert wird, wird eine standardisierte Vorwärmphase erzielt, in welcher durch die geometrische Form der Pakete bedingt eine kontrollierte Entgasung eintritt und eine entsprechend anhaltende thermische Beanspruchung der organischen Verunreinigungen bzw. Kunststoffe der Schrottpakete sichergestellt wird. Es wird somit in der Vorwärmphase eine Pyrolyse gewährleistet, wobei die thermische Beanspruchung der Kunststoffe, welche an der Oberfläche und im Inneren der Standardpakete enthalten sind, unter Sauerstoffausschluß erfolgen kann, so daß auch aus halogenhaltigen, insbesondere chlorhältigen Kunststoffen kein Dioxin entstehen kann. Dadurch, daß vom Schrottschmelzprozeß gesondert in einem Schmelzprozeß eine überhitzte Eisenschmelze hergestellt wird, können in einem derartigen Prozeß ohne Rücksichtnahme auf die im Schrott enthaltenen Kunststoffanteile die für die Herstellung einer kohlenstoffhältigen Eisenschmelze optimalen Parameter leicht eingehalten werden, da ja auf die Bildung von Dioxinen oder polyhalogenierten Furanen und auf nennenswerte Verunreinigungen der Abgase wesentlich weniger Rücksicht genommen werden muß. Dadurch, daß nun der C-Gehalt einer derartigen gesondert hergestellten Eisenschmelze entsprechend hoch eingestellt wird und eine derartige Schmelze als überhitzte Eisenschmelze vorgelegt wird, wird unmittelbar beim Einschmelzen unter Ausnutzung des wesentlich verbesserten Wärmeüberganges zwischen flüssiger Schmelze und einzuschmelzendem Schrott ein Roheisen mit vorbestimmten Kohlenstoffgehalt hergestellt, wobei in einem geschlossenen System gearbeitet werden kann und lediglich die Pyrolysegase bzw. eventuell notwendige inerte Trägergase im Rahmen des Verfahrens einer Aufarbeitung unterworfen werden müssen. Die Überhitzung des Eisenbades kann hiebei mit Vorteil elektrisch insbesondere durch Induktion erfolgen, wobei das erfindungsgemäße Verfahren so durchgeführt wird, daß die überhitzte Eisenschmelze innerhalb des Schrottschmelzprozesses umgewälzt wird. Insgesamt kann der Schmelzpunkt des zu schmelzenden Materials durch Aufkohlung im Flüssigkeitsbad beträchtlich abgesenkt werden und es wird weiters der Vorteil erreicht, daß bis auf den zur Aufkohlung benötigten Kohlenstoff, kein weiterer Koks eingesetzt werden muß, wodurch sich eine wesentlich wirtschaftlichere Verfahrensführung und wesentlich geringere Abgasmenge ergibt, welche in der Folge einer Aufarbeitung zugeführt werden müßte. Die zu reinigenden Schachtgase bestehen im wesentlichen nur mehr aus den Pyrolysegasen der im Schrott enthaltenen Kunststoffe und das Aufschmelzen kann unter definierten Temperaturbedingungen ablaufen, wodurch eine wesentliche Verbesserung der Konstanz der Qualität des erhaltenen Roheisens erzielt wird.

Die Aufkohlung der überhitzten Eisenschmelze erfolgt außerhalb des eigentlichen Schrottschmelzprozesses und kann durch Einblasen von Kohlenstaub erfolgen. Der Schmelzreaktor für die Herstellung der überhitzten Eisenschmelze kann als Konverter ausgebildet sein, in dem die Temperatur des Roheisens durch Verbrennen von in die Schmelze eingeblasenen Kohlenstaub eingestellt wird.

Das erfindungsgemäße Verfahren wird so durchgeführt, daß der Schrottschmelzprozeß in einem Schachtofen durchgeführt wird und die überhitzte aufgekohlte Eisenschmelze im Querstrom zum Schachtofen am Fuß des Schachtes unter Ausbildung eines gasdichten Verschlusses hindurchgeleitet und in einem Sammelgefäß aufgefangen wird, daß im Schachtofen ein Sauerstoffmangel aufrechterhalten wird und daß die Abgase des Schachtofens, insbesondere Pyrolyse- oder Schwelgase, gemeinsam mit gegebenenfalls in den Schachtofen eingebrachten inerten Trägergasen einer Gasreinigung unterworfen werden. Eine derartige Verfahrensweise, durch welche eine vollständige Abdichtung gegenüber der Außenwelt und damit ein geschlossenes System sichergestellt wird, wird in konstruktiv einfacher weise so realisiert, daß die Eisenschmelze im Querstrom zu dem absinkenden Schrott durch den Schacht strömt. In diesem Bereich kann durch Einblasen von inerten Gasen die Badbewegung erhöht werden, um den Wärme- und Stoffübergang zwischen flüssigem Metall und Schrott zu steigern, und um eine homogene Temperaturverteilung in der Schmelze sicherzustellen.

Da die Pyrolysegase unter Sauerstoffmangelbedingungen gebildet wurden, kann nach Reinigung der Abgase in der Regel ein hochwertiges Synthesegas erzielt werden, welches auch zur energetischen Nutzung weiterverwendet werden kann.

Das Roheisen wird nach dem Durchströmen des Schachtes im Querstrom in einem weiteren Gefäß gesammelt, wobei ein Teilstrom dieses Roheisens im Kreislauf geführt werden kann. Zu diesem Zweck können beispielsweise elektromagnetische Rinnen vorgesehen sein, welche einen Teilstrom des Roheisens in den Ausgangsreaktor zurücktransportieren. Nach Einstellen einer entsprechenden Temperatur und eines entsprechenden Kohlenstoffgehaltes steht neuerlich eine entsprechende Schmelzflüssigkeit für den Schrott zur Verfügung, wohingegen der Rest des produzierten Roheisens dem Sammelgefäß zur Weiterverarbeitung entnommen werden kann.

In besonders vorteilhafter Weise wird das erfindungsgemäße Verfahren hiebei so durchgeführt, daß der C-Gehalt der aus dem Schachtofen abgezogenen Schrottschmelze überwacht wird und daß der C-Gehalt der vorgelegten überhitzten Eisenschmelze auf einen Wert eingestellt wird, welcher in der abgezogenen Schrottschmelze einen C-Gehalt von über 2 Gew.- %, vorzugsweise zwischen 2,5 und 3,9 Gew.-%, ergibt, wobei vorzugsweise eine überhitzte Eisenschmelze mit 4 bis 5,5 Gew.-%, vorzugsweise 4,5 - 5 Gew.-% Kohlenstoff und einer Temperatur zwischen 1500 und 1700°C, vorzugsweise 1600°C, vorgelegt wird. Unter den genannten Bedingungen und unter Einhaltung der genannten Parameter hat sich eine besonders wirtschaftliche Verfahrensführung ergeben, wobei für den Fall, daß ein Teil der abgezogenen Schmelze im Kreislauf geführt wird, mit Vorteil so vorgegangen wird, daß dieser Teilstrom vor dem neuerlichen Transport in den Schrottschmelzprozeß auf einen C-Gehalt von über 4 Gew.-%, vorzugsweise 4,5 Gew.-%, aufgekohlt wird.

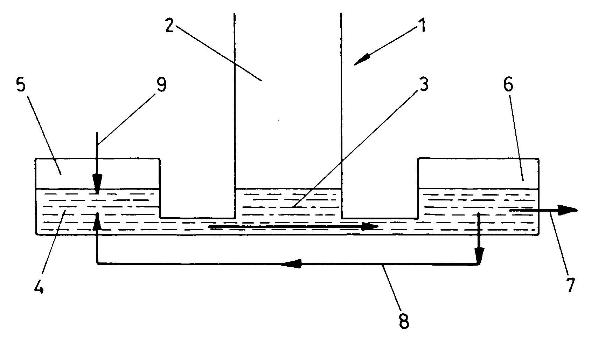

Die Erfindung wird nachfolgend an Hand einer für die Durchführung des erfindungsgemäßen Verfahrens geeigneten, in der Zeichnung dargestellten Vorrichtung näher erläutert.

In der Zeichnung ist schematisch ein Schachtofen 1 dargestellt, in welchem Schrott eingebracht wird. Der Schacht 2 wird an seinem oberen Ende gasdicht geschlossen und die gebildeten Schachtgase werden einer konventionellen Gasreinigung beispielsweise einem Thermoreaktor zugeführt. Der im Schacht 2 absinkende Schrott gelangt in eine Schmelzzone 3, in welcher durch Kontakt mit einer kohlenstoffhältigen überhitzten Eisenschmelze 4 ein Einschmelzen des Schrottes erfolgt. Die aufsteigenden heißen Gase bewirken eine Pyrolyse, wobei im Schacht Temperaturen von etwa 1400°C bis nahe dem oberen Rand des Schachtofens 1 aufrechterhalten werden. Die Schmelze 4 selbst wird im Querstrom zum Schachtofen am Fuß des Schachtes 2 unter Ausbildung eines gasdichten Verschlusses durchgeleitet, wobei die Einstellung des erforderlichen Kohlenstoffgehaltes bzw. die Überhitzung der Eisenschmelze in einem gesonderten Schmelzofen 5 erfolgt. In diesem Schmelzaggregat 5 erfolgt die Kohlenstoffzufuhr zur Herstellung eines Kohlenstoffgehaltes über 4,5 Gew.-%, wobei das Schmelzaggregat elektrisch beheizt sein kann oder aber auch als Brennstoff beheizter Ofen ausgebildet sein kann. Die überhitzte aufgekohlte Schmelze wird bei Temperaturen von etwa 1600°C quer zur niedergehenden Schrottschmelze durch den Schacht 2 hindurchgeleitet, wobei sich ein Roheisen mit einem Kohlenstoffgehalt zwischen 2,5 und 3,9 Gew.-% ergibt. Von diesem Roheisen, welches in einem Sammelgefäß 6 aufgefangen wird und aus diesem über Leitung 7 abgezogen werden kann, kann eine Teilmenge über eine Rinne 8 rückgeführt werden. Der Transport in der Rinne 8 kann beispielsweise durch magnetischen Antrieb erfolgen.

Die teilweise rückgeführte Menge des Roheisens wird durch Einblasen von Kohlenstoff über eine Leitung 9 im Schmelzaggregat 5 wiederum auf einen Kohlenstoffgehalt von über 4,5 Gew.-% gebracht, wobei die auf diese Weise gebildete überhitzte aufgekohlte Schmelze wiederum zum Einschmelzen der in paketierter Form in den Schachtofen 1 eingebrachten Charge dient.

## Patentansprüche

1. Verfahren zum Einschmelzen von Schrott in einer überhitzten Eisenschmelze, wobei
- der Schrott in paketierter Form chargiert wird und in eine mittels eines vom Schrottschmelzprozeß gesonderten Schmelzprozeß hergestellte überhitzte Eisenschmelze eingebracht wird,
- der C-Gehalt der überhitzten Eisenschmelze außerhalb des Schrottschmelzprozesses in der Schmelze (4) eingestellt wird und die C-Zugabe in Abhängigkeit von der C-Abnahme im geschmolzenen Schrott in einem gesonderten Schmelzofen (5) vorgenommen wird,
- der Schrottschmelzprozeß in einem Schachtofen (1) durchgeführt wird und die überhitzte aufgekohlte Eisenschmelze (4) im Querstrom zum Schachtofen am Fuß des Schachtes unter Ausbildung eines gasdichten Verschlusses hindurchgeleitet und in einem Sammelgefäß (6) aufgefangen wird,
- im Schachtofen (1) ein Sauerstoffmangel aufrechterhalten wird und die Abgase des Schachtofens (1), insbesondere Pyrolyse- oder Schwelgase, gemeinsam mit gegebenenfalls in den Schachtofen (1) eingebrachten inerten Trägergasen einer Gasreinigung unterworfen werden.

2. Verfahren nach Anspruch 1, dadurch gekennzeichnet, daß die überhitzte Eisenschmelze innerhalb des Schrottschmelzprozesses induktiv umgewälzt wird.

3. Verfahren nach Anspruch 1 oder 2, dadurch gekennzeichnet, daß die gereinigten Abgase des Schachtofens (1) als Synthesegas, insbesondere zur energetischen Nutzung weiterverwendet werden.

4. Verfahren nach einem der Ansprüche 1 bis 3, dadurch gekennzeichnet, daß der C-Gehalt der aus dem Schachtofen (1) abgezogenen Schrottschmelze überwacht wird und daß der C-Gehalt der vorgelegten überhitzten Eisenschmelze (4) auf einen Wert eingestellt wird, welcher in der abgezogenen Schrottschmelze einen C-Gehalt von über 2 Gew.-%, vorzugsweise zwischen 2,5 und 3,9 Gew.-%, ergibt.

5. Verfahren nach einem der Ansprüche 1 bis 4, dadurch gekennzeichnet, daß eine überhitzte Eisenschmelze (4) mit 4 bis 5,5 Gew.-%, vorzugsweise 4,5 - 5 Gew.-% Kohlenstoff und einer Temperatur zwischen 1500 und 1700°C, vorzugsweise 1600°C, vorgelegt wird.

6. Verfahren nach einem der Ansprüche 1 bis 5, dadurch gekennzeichnet, daß ein Teilstrom der abgezogenen Schrottschmelze im Kreislauf geführt wird und vor dem neuerlichen Transport in den Schrottschmelzprozeß auf einen C-Gehalt von über 4 Gew.-%, vorzugsweise 4,5 Gew.-%, aufgekohlt wird.

## Claims

1. A process for melting scrap in a superheated iron melt, wherein
- the scrap is charged in the form of scrap bales and introduced into a superheated iron melt produced in a melting process different from the scrap melting process,
- the carbon content of the overheated iron melt is adjusted in the melt (4) outside the scrap melting process and the addition of carbon is effected in a separate melting furnace (5) as a function of the carbon decrease within the molten scrap,
- the scrap melting process is carried out in a shaft furnace (1) and the superheated carburized iron melt (4) in counterflow to the shaft furnace is passed through on the base of the shaft while forming a gas-tight closure and collected in a collection vessel (6),
- an oxygen deficiency is maintained within the shaft furnace (1) and the exhaust gases from the shaft furnace (1), in particular pyrolysis gases or low temperature carbonization gases, are subjected to gas cleaning along with inert carrier gases optionally introduced into the shaft furnace (1).

2. A process according to claim 1, characterized in that the overheated iron melt is inductively circulated within the scrap melting process.

3. A process according to claim 1 or 2, characterized in that the purified exhaust gases from the shaft furnace (1) are further used as synthesis gases, in particular for energetic utilization.

4. A process according to any one of claims 1 to 3, characterized in that the carbon content of the scrap melt drawn off the shaft furnace (1) is monitored and the carbon content of the superheated iron melt (4) provided is adjusted to a value that yields a carbon content of more than 2 wt.-%, preferably between 2.5 and 3.9 wt.-%, in the scrap melt drawn off.

5. A process according to any one of claims 1 to 4, characterized in that a superheated iron melt (4) having a carbon content of 4 to 5.5 wt.-%, preferably 4.5 to 5 wt.-%, and a temperature of between 1500 and 1700°C, preferably 1600°C, is provided.

6. A process according to any one of claims 1 to 5, characterized in that a partial flow of the scrap melt drawn off is recirculated and carburized to a carbon content of more than 4 wt.-%, preferably 4.5 wt-%, prior to being reconveyed into the scrap melting process.

## Revendications

1. Procédé pour faire fondre des ferrailles dans une masse de fer en fusion surchauffée, selon lequel:
- les ferrailles sont chargées par paquets et sont introduites dans une masse de fer en fusion surchauffée, produite au moyen d'un processus de fusion séparé du processus de fusion des ferrailles,
- la teneur en C de la masse de fer en fusion surchauffée est ajustée dans la masse en fusion (4) en dehors du processus de fusion des ferrailles et l'apport de C s'effectue dans un four de fusion séparé (5), en fonction de la perte de C dans les ferrailles fondues,
- le processus de fusion des ferrailles est mis en oeuvre dans un four à cuve droite (1) et le fer en fusion carburé (4), surchauffé, est conduit, suivant un courant transversal au four à cuve droite, à travers le pied de la cuve, en réalisant une obturation étanche aux gaz, et est recueilli dans un récipient collecteur (6),
- un déficit d'oxygène est maintenu dans le four à cuve droite (1) et les gaz perdus s'échappant du four à cuve droite (1), notamment des gaz de pyrolyse ou des gaz de distillation, sont soumis conjointement avec des gaz porteurs inertes également introduits dans le four à cuve droite (1), à une épuration de gaz.

2. Procédé selon la revendication 1, caractérisé en ce que la masse de fer en fusion surchauffée est mise en circulation, par induction, au sein du processus de fusion des ferrailles.

3. Procédé selon la revendication 1 ou 2, caractérisé en ce que les gaz perdus épurés, s'échappant du four à cuve droite (1), sont recyclés en tant que gaz de synthèse, notamment pour être exploités à des fins énergétiques.

4. Procédé selon l'une des revendications 1 à 3, caractérisé en ce que la teneur en C de la masse de ferrailles en fusion, soutirée du four à cuve droite (1), est contrôlée et en ce que la teneur en C de la masse de fer en fusion surchauffée (4), qui est offerte, est ajustée à une valeur qui donne lieu, dans la masse de ferrailles en fusion soutirée, à une teneur en C supérieure à 2% en poids, se situant de préférence entre 2,5 et 3,9% en poids.

5. Procédé selon l'une des revendications 1 à 4, caractérisé en ce qu'une masse de fer en fusion surchauffée (4) ayant 4 à 5,5% en poids, de préférence 4,5 à 5% en poids, de carbone et une température située entre 1500 et 1700°C, de préférence à 1600°C, est offerte.

6. Procédé selon l'une des revendications 1 à 5, caractérisé en ce qu'un courant partiel de la masse de ferrailles en fusion soutirée est dirigé dans le circuit et, avant d'être à nouveau transporté dans le processus de fusion des ferrailles, est carburé jusqu'à une teneur en C supérieure à 4% en poids, de préférence de 4,5% en poids.
